# EUROPEAN PATENT APPLICATION

(11) **EP 1 640 779 A2**
(43) Date of publication of application: **29.03.2006**
(21) Application number: 05255714.7
(22) Date of filing: 14.09.2005
(51) Int. Cl.: G02B 26/00, G02F 1/21

(54) **Method and device for reflectance with a predetermined spectral response**

(30) Priority: 27.09.2004 US 613375 P; 18.03.2005 US 83841
(71) Applicant: IDC, LLC, San Francisco, CA 94107 (US)
(72) Inventor: Floyd, Philip D., Redwood City California 94062 (US)
(74) Representative: Dunlop, Hugh Christopher

(57) **Abstract**

In various embodiments of the invention, a display device comprises an illumination apparatus configured to emit light of a different color at different times and at least one interferometric light modulating device illuminated by the illumination apparatus. In certain preferred embodiments, interferometric light modulating devices are illuminated for short durations with different color light, the durations of the time being sufficiently short to produce color fusion or blending of colors as perceived by the human eye. The interferometric light modulating device may comprise a white interferometric light modulating device that reflects white light in one state. The interferometric light modulating device may also have a reflectivity spectrum that includes a least two color peaks.

## Description

### Background

The field of the invention relates to micro-electro-mechanical (MEMS) systems. More specifically, the invention relates to light modulation, including interferometric light modulation.

MEMS include micro mechanical elements, actuators, and electronics. Micromechanical elements may be created using deposition, etching, and or other micromachining processes that etch away parts of substrates and/or deposited material layers or that add layers to form electrical and electromechanical devices.

Spatial light modulators are an example of MEMS systems. Spatial light modulators used for imaging applications come in many different forms. Transmissive liquid crystal device (LCD) modulators modulate light by controlling the twist and/or alignment of crystalline materials to block or pass light. Reflective spatial light modulators exploit various physical effects to control the amount of light reflected to the imaging surface. Examples of such reflective modulators include reflective LCDs, and digital micromirror devices (DMD™).

Another example of a spatial light modulator is an interferometric modulator that modulates light by interference. An interferometric modulator may comprise a pair of conductive plates, one or both of which may be transparent and/or reflective in whole or part and capable of relative motion upon application of an appropriate electrical signal. One plate may comprise a stationary layer deposited on a substrate, the other plate may comprise a metallic membrane separated from the stationary layer by an air gap. Such devices have a wide range of applications, and it would be beneficial in the art to utilize and/or modify the characteristics of these types of devices so that their features can be exploited in improving existing products and creating new products that have not yet been developed. An iMoD^{TM} is one example of an interferometric light modulator. The iMoD employs a cavity having at least one movable or deflectable wall. As the wall, typically comprised at least partly of metal, moves towards a front surface of the cavity, interference occurs that affects the color of light viewed at the front surface. The front surface is typically the surface where the image seen by the viewer appears, as the iMoD is a direct-view device.

### Summary

The system, method, and devices of the invention each have several aspects, no single one of which is solely responsible for its desirable attributes. Without limiting the scope of this invention, its more prominent features will now be discussed briefly. After considering this discussion, and particularly after reading the section entitled "Detailed Description of Certain Embodiments" one will understand how the features of this invention provide advantages over other display devices.

In one embodiment, a display device is provided, comprising: at least one interferometric light modulator configured to reflect light, the at least one interferometric light modulator having a spectral response including two or more reflectance peaks in the visible spectrum, and a light source having an emission spectra that includes at least one emission peak at least partially overlapping one of the two or more reflectance peaks.

In another embodiment, a display device is provided, comprising: means for modulating light, wherein the modulating means is capable of reflecting light having a plurality of intensity peaks in the visible spectrum, and means for selectively illuminating the modulating means with light including at least the plurality of intensity peaks in the visible spectrum.

In another embodiment, a method of manufacturing display device is provided, comprising: providing a plurality of pixel elements, each pixel element comprising at least one interferometric light modulator having a spectral response that includes two or more reflectance peaks in the visible spectrum; and providing a light source configured to selectively illuminate the plurality of pixel elements with light having one or more spectral peaks substantially overlapping the two or more reflectance peaks.

Another embodiment comprises a method of displaying an image. This method comprises illuminating at least one interferometric light modulator with light from a light source and reflecting the light from the at least one interferometric light modulator. The at least one interferometric light modulator has a spectral response including two or more reflectance peaks in the visible spectrum. The light source has an emission spectra that includes at least one emission peak at least partially overlapping one of the two or more reflectance peaks.

In another embodiment, a display device comprises a plurality of pixel elements, each pixel element comprising a plurality of interferometric light modulators switchable between different reflective states, and an illumination apparatus configured to selectively illuminate the plurality of pixel elements with light of different color at different times.

In another embodiment, a display device is provided, comprising: means for interferometrically modulating light switchable between different reflective states, and means for selectively illuminating the modulating means with light of different color at different times.

Another embodiment comprises a method of manufacturing a display device. In this method, a plurality of pixel elements are provided. Each pixel element comprises an interferometric light modulator switchable between different reflective states. An illumination apparatus is disposed with respect to the plurality of pixel elements so as to selectively illuminate the plurality of pixel elements with light of different color at different times.

Another embodiment comprises a method of displaying an image. In this method, a plurality of pixel elements are selectively illuminated with light of different color at different times. Each pixel element comprises an interferometric light modulator switchable between different reflective states. The light is reflected from at least a portion of the plurality of pixel elements.

In another embodiment, a display device comprises an illumination apparatus, at least one light modulating devices and a control system. The illumination apparatus is configured to emit light comprising an emission spectra having a spectral output that varies with time. The at least one light modulating device is configured to reflect light from the illumination apparatus. The at least one light modulating device comprises an optical cavity formed by a pair of reflective surfaces. The control system is configured to vary the spectral output of the illumination apparatus.

### Brief Description of the Drawings

Figure 1 is an isometric view depicting a portion of one embodiment of an interferometric modulator display in which a movable reflective layer of a first interferometric modulator is in a released position and a movable reflective layer of a second interferometric modulator is in an actuated position.
Figure 2 is a system block diagram illustrating one embodiment of an electronic device incorporating a 3x3 interferometric modulator display.
Figure 3 is a diagram of movable mirror position versus applied voltage for one exemplary embodiment of an interferometric modulator of Figure 1.
Figure 4 is an illustration of a set of row and column voltages that may be used to drive an interferometric modulator display.
Figure 5A illustrates one exemplary frame of display data in the 3x3 interferometric modulator display of Figure 2.
Figure 5B illustrates one exemplary timing diagram for row and column signals that may be used to write the frame of Figure 5A.
Figure 6A is a cross section of the device of Figure 1.
Figure 6B is a cross section of an alternative embodiment of an interferometric modulator.
Figure 6C is a cross section of another alternative embodiment of an interferometric modulator.
Figure 7A illustrates an interferometric modulator array of substantially identical modulators.
Figure 7B illustrates the integration of the modulator array illustrated in Figure 7A with a waveguide and multi-colored light source.
Figure 8 is a plot on axis of reflectivity versus wavelength of a reflective response an exemplary interferometric modulator.
Figure 9 provides a block diagram illustrating the spatial and temporal mixing that occurs in a system.
Figure 10 provides a flowchart that illustrates the control of an interferometric modulator array in conjunction with a multicolored light source.
Figure 11 is an exemplary interferometric light modulator.
Figures 12A and 12B are system block diagrams illustrating an embodiment of a visual display device comprising a plurality of interferometric modulators.

### Detailed Description of the Preferred Embodiments

In various embodiments of the invention, a plurality of interferometric modulators are illuminated with an illumination apparatus that emits different color light at different times. This illumination apparatus may emit different colors (e.g., red, green, and blue) in a sequence that is repeated. This illumination apparatus may comprise, for example, a red, a green, and a blue light emitting diode. The interferometric modulators may, in such a case, be illuminated with red light over a first time period, with green light over a second time period, and with blue light over a third period. This colored light is reflected from the interferometric modulators to a viewer. In certain preferred embodiments, the durations of the time periods are sufficiently short to produce color fusion or blending of colors as perceived by the eye of the viewer. The interferometric light modulators may switch faster than the time period. The interferometric light modulating device may comprise a white interferometric light modulating device that reflects white light in one state. This white light interferometric modulator will also reflect the color light from the illumination apparatus. The interferometric light modulating device may also have a reflectivity spectrum that includes at least two color peaks. These two color peaks may overlap with colors emitted by the illumination apparatus.

Advantageously, various exemplary embodiments may comprise a plurality of interferometric light modulators wherein each of the light modulating elements includes an optical cavity that is designed to provide essentially the same optical response. In certain embodiments, for example, when an optical cavity is closed on one of the interferometric light modulators, the color black will be the spectral response. Conversely, when the optical cavity is open, light is reflected having a predetermined spectral response. This predetermined optical response may be broadband white, such that a wide range of colors incident on the mirror will be reflected with approximately equal intensity. Alternatively, this optical response may include a plurality of separate colors peaks, such as red, blue and green color peaks, similar to the colors produced by the illumination apparatus.

As described above, the illumination apparatus may comprise a multi-colored light source. The color(s) reflected by the interferometric light modulators may be controlled by the spectrum of light emitted by the multi-colored light source and directed towards the light modulators. A control system may be provided that controls the interferometric modulators so as to create images having the desired colors. In some embodiments, the control system may also control the output of the light source and thus the illumination of the interferometric modulators. The control system may be referred to herein as a control processor and may comprise one or more electronics devices or other control or computational devices. The control system may comprise, for example, a processor and an array controller. The control system may comprise a microprocessor in some embodiments.

The following detailed description is directed to certain specific embodiments of the invention. However, the invention can be embodied in a multitude of different ways. In this description, reference is made to the drawings wherein like parts are designated with like numerals throughout. As will be apparent from the following description, the invention may be implemented in any device that is configured to display an image, whether in motion (e.g., video) or stationary (e.g., still image), and whether textual or pictorial. More particularly, it is contemplated that the invention may be implemented in or associated with a variety of electronic devices such as, but not limited to, mobile telephones, wireless devices, personal data assistants (PDAs), hand-held or portable computers, GPS receivers/navigators, cameras, MP3 players, camcorders, game consoles, wrist watches, clocks, calculators, television monitors, flat panel displays, computer monitors, auto displays (e.g., odometer display, etc.), cockpit controls and/or displays, display of camera views (e.g., display of a rear view camera in a vehicle), electronic photographs, electronic billboards or signs, projectors, architectural structures, packaging, and aesthetic structures (e.g., display of images on a piece of jewelry). MEMS devices of similar structure to those described herein can also be used in non-display applications such as in electronic switching devices.

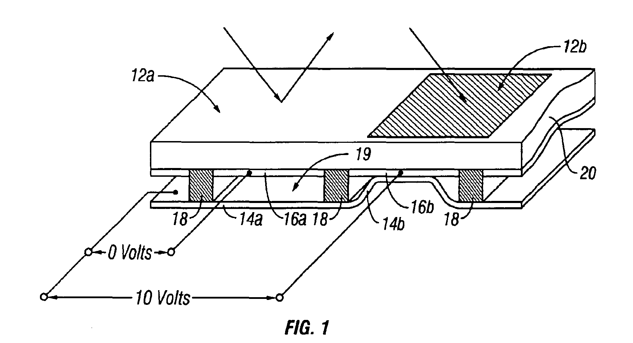

One interferometric modulator display embodiment comprising an interferometric MEMS display element is illustrated in Figure 1. In these devices, the pixels are in either a bright or dark state. In the bright ("on" or "open") state, the display element reflects a large portion of incident visible light to a user. When in the dark ("off" or "closed") state, the display element reflects little incident visible light to the user. Depending on the embodiment, the light reflectance properties of the "on" and "off' states may be reversed. MEMS pixels can be configured to reflect predominantly at selected colors, allowing for a color display in addition to black and white.

Figure 1 is an isometric view depicting two adjacent pixels in a series of pixels of a visual display, wherein each pixel comprises a MEMS interferometric modulator. In some embodiments, an interferometric modulator display comprises a row/column array of these interferometric modulators. Each interferometric modulator includes a pair of reflective layers positioned at a variable and controllable distance from each other to form a resonant optical cavity with at least one variable dimension. In one embodiment, one of the reflective layers may be moved between two positions. In the first position, referred to herein as the released state, the movable layer is positioned at a relatively large distance from a fixed partially reflective layer. In the second position, the movable layer is positioned more closely adjacent to the partially reflective layer. Incident light that reflects from the two layers interferes constructively or destructively depending on the position of the movable reflective layer, producing either an overall reflective or non-reflective state for each pixel.

The depicted portion of the pixel array in Figure 1 includes two adjacent interferometric modulators 12a and 12b. In the interferometric modulator 12a on the left, a movable and highly reflective layer 14a is illustrated in a released position at a predetermined distance from a fixed partially reflective layer 16a. In the interferometric modulator 12b on the right, the movable highly reflective layer 14b is illustrated in an actuated position adjacent to the fixed partially reflective layer 16b.

The fixed layers 16a, 16b are electrically conductive, partially transparent and partially reflective, and may be fabricated, for example, by depositing one or more layers each of chromium and indium-tin-oxide onto a transparent substrate 20. The layers are patterned into parallel strips, and may form row electrodes in a display device as described further below. The movable layers 14a, 14b may be formed as a series of parallel strips of a deposited metal layer or layers (orthogonal to the row electrodes 16a, 16b) deposited on top of posts 18 and an intervening sacrificial material deposited between the posts 18. When the sacrificial material is etched away, the deformable metal layers are separated from the fixed metal layers by a defined air gap 19. A highly conductive and reflective material such as aluminum may be used for the deformable layers, and these strips may form column electrodes in a display device.

With no applied voltage, the cavity 19 remains between the layers 14a, 16a and the deformable layer is in a mechanically relaxed state as illustrated by the pixel 12a in Figure 1. However, when a potential difference is applied to a selected row and column, the capacitor formed at the intersection of the row and column electrodes at the corresponding pixel becomes charged, and electrostatic forces pull the electrodes together. If the voltage is high enough, the movable layer is deformed and is forced against the fixed layer (a dielectric material which is not illustrated in this Figure may be deposited on the fixed layer to prevent shorting and control the separation distance) as illustrated by the pixel 12b on the right in Figure 1. The behavior is the same regardless of the polarity of the applied potential difference. In this way, row/column actuation that can control the reflective vs. non-reflective pixel states is analogous in many ways to that used in conventional LCD and other display technologies.

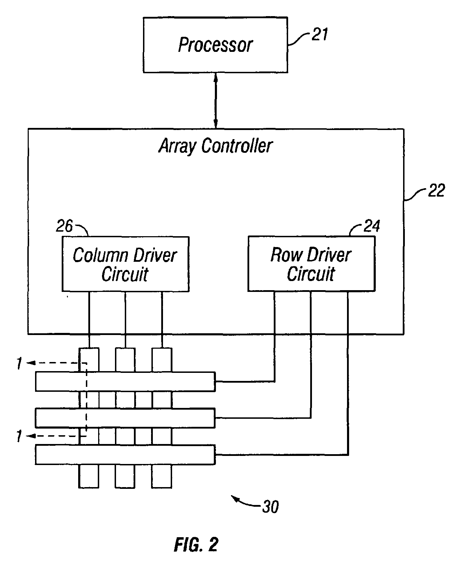

Figures 2 through 5B illustrate one exemplary process and system for using an array of interferometric modulators in a display application. Figure 2 is a system block diagram illustrating one embodiment of an electronic device that may incorporate aspects of the invention. In the exemplary embodiment, the electronic device includes a processor 21 which may be any general purpose single- or multi-chip microprocessor such as an ARM, Pentium®, Pentium II®, Pentium III®, Pentium IV®, Pentium® Pro, an 8051, a MIPS®, a Power PC®, an ALPHA®, or any special purpose microprocessor such as a digital signal processor, microcontroller, or a programmable gate array. As is conventional in the art, the processor 21 may be configured to execute one or more software modules. In addition to executing an operating system, the processor may be configured to execute one or more software applications, including a web browser, a telephone application, an email program, or any other software application.

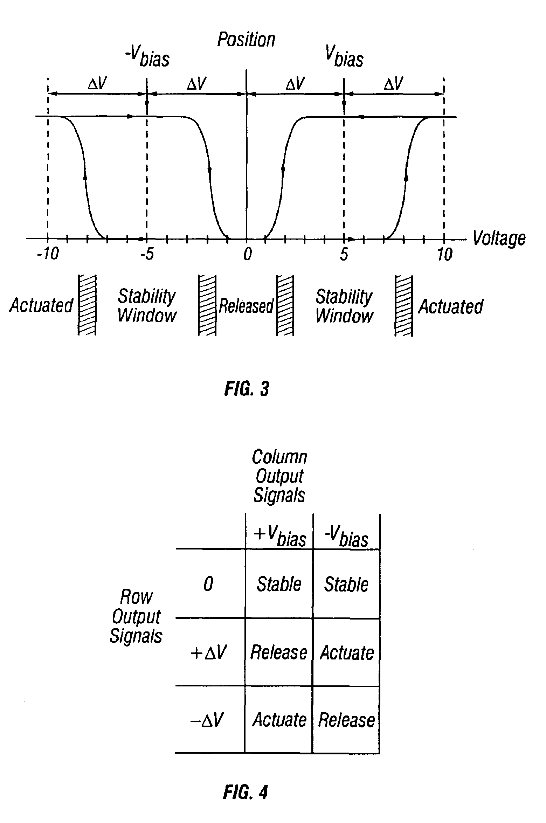

In one embodiment, the processor 21 is also configured to communicate with an array controller 22. In one embodiment, the array controller 22 includes a row driver circuit 24 and a column driver circuit 26 that provide signals to a pixel array 30. The cross section of the array illustrated in Figure 1 is shown by the lines 1-1 in Figure 2. For MEMS interferometric modulators, the row/column actuation protocol may take advantage of a hysteresis property of these devices illustrated in Figure 3. It may require, for example, a 10 volt potential difference to cause a movable layer to deform from the released state to the actuated state. However, when the voltage is reduced from that value, the movable layer maintains its state as the voltage drops back below 10 volts. In the exemplary embodiment of Figure 3, the movable layer does not release completely until the voltage drops below 2 volts. There is thus a range of voltage, about 3 to 7 V in the example illustrated in Figure 3, where there exists a window of applied voltage within which the device is stable in either the released or actuated state. This is referred to herein as the "hysteresis window" or "stability window." For a display array having the hysteresis characteristics of Figure 3, the row/column actuation protocol can be designed such that during row strobing, pixels in the strobed row that are to be actuated are exposed to a voltage difference of about 10 volts, and pixels that are to be released are exposed to a voltage difference of close to zero volts. After the strobe, the pixels are exposed to a steady state voltage difference of about 5 volts such that they remain in whatever state the row strobe put them in. After being written, each pixel sees a potential difference within the "stability window" of 3-7 volts in this example. This feature makes the pixel design illustrated in Figure 1 stable under the same applied voltage conditions in either an actuated or released pre-existing state. Since each pixel of the interferometric modulator, whether in the actuated or released state, is essentially a capacitor formed by the fixed and moving reflective layers, this stable state can be held at a voltage within the hysteresis window with almost no power dissipation. Essentially no current flows into the pixel if the applied potential is fixed.

In typical applications, a display frame may be created by asserting the set of column electrodes in accordance with the desired set of actuated pixels in the first row. A row pulse is then applied to the row 1 electrode, actuating the pixels corresponding to the asserted column lines. The asserted set of column electrodes is then changed to correspond to the desired set of actuated pixels in the second row. A pulse is then applied to the row 2 electrode, actuating the appropriate pixels in row 2 in accordance with the asserted column electrodes. The row 1 pixels are unaffected by the row 2 pulse, and remain in the state they were set to during the row 1 pulse. This may be repeated for the entire series of rows in a sequential fashion to produce the frame. Generally, the frames are refreshed and/or updated with new display data by continually repeating this process at some desired number of frames per second. A wide variety of protocols for driving row and column electrodes of pixel arrays to produce display frames are also well known and may be used in conjunction with the present invention.

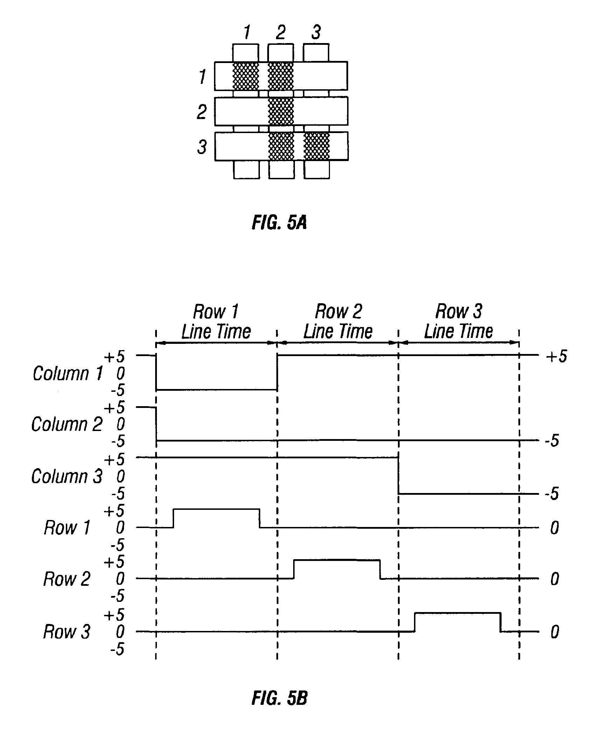

Figures 4, 5A, and 5B illustrate one possible actuation protocol for creating a display frame on the 3x3 array of Figure 2. Figure 4 illustrates a possible set of column and row voltage levels that may be used for pixels exhibiting the hysteresis curves of Figure 3. In the Figure 4 embodiment, actuating a pixel involves setting the appropriate column to -Vbias, and the appropriate row to +ΔV, which may correspond to -5 volts and +5 volts respectively Releasing the pixel is accomplished by setting the appropriate column to +Vbias, and the appropriate row to the same +ΔV, producing a zero volt potential difference across the pixel. In those rows where the row voltage is held at zero volts, the pixels are stable in whatever state they were originally in, regardless of whether the column is at +Vbias, or-Vbias. As is also illustrated in Figure 4, it will be appreciated that voltages of opposite polarity than those described above can be used, e.g., actuating a pixel can involve setting the appropriate column to +V_{bias}, and the appropriaterow to ―ΔV. In this embodiment, releasing the pixel is accomplished by setting the appropriate column to -V_{bias}, and the appropriate row to the same -ΔV, producing a zero volt potential difference across the pixel.

Figure 5B is a timing diagram showing a series of row and column signals applied to the 3x3 array of Figure 2 which will result in the display arrangement illustrated in Figure 5A, where actuated pixels are non-reflective. Prior to writing the frame illustrated in Figure 5A, the pixels can be in any state, and in this example, all the rows are at 0 volts, and all the columns are at +5 volts. With these applied voltages, all pixels are stable in their existing actuated or released states.

In the Figure 5A frame, pixels (1,1), (1,2), (2,2), (3,2) and (3,3) are actuated. To accomplish this, during a "line time" for row 1, columns 1 and 2 are set to-5 volts, and column 3 is set to +5 volts. This does not change the state of any pixels, because all the pixels remain in the 3-7 volt stability window. Row 1 is then strobed with a pulse that goes from 0, up to 5 volts, and back to zero. This actuates the (1,1) and (1,2) pixels and releases the (1,3) pixel. No other pixels in the array are affected. To set row 2 as desired, column 2 is set to -5 volts, and columns 1 and 3 are set to +5 volts. The same strobe applied to row 2 will then actuate pixel (2,2) and release pixels (2,1) and (2,3). Again, no other pixels of the array are affected. Row 3 is similarly set by setting columns 2 and 3 to -5 volts, and column 1 to +5 volts. The row 3 strobe sets the row 3 pixels as shown in Figure 5A. After writing the frame, the row potentials are zero, and the column potentials can remain at either +5 or -5 volts, and the display is then stable in the arrangement of Figure 5A. It will be appreciated that the same procedure can be employed for arrays of dozens or hundreds of rows and columns. It will also be appreciated that the timing, sequence, and levels of voltages used to perform row and column actuation can be varied widely within the general principles outlined above, and the above example is exemplary only, and any actuation voltage method can be used with the present invention.

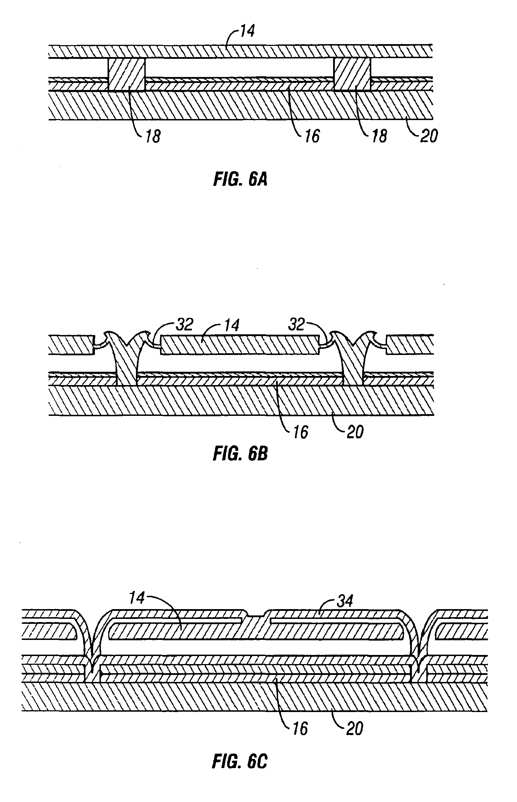

The details of the structure of interferometric modulators that operate in accordance with the principles set forth above may vary widely. For example, Figures 6A-6C illustrate three different embodiments of the moving mirror structure. Figure 6A is a cross section of the embodiment of Figure 1, where a strip of metal material 14 is deposited on orthogonally extending supports 18. In Figure 6B, the moveable reflective material 14 is attached to supports at the corners only, on tethers 32. In Figure 6C, the moveable reflective material 14 is suspended from a deformable layer 34. This embodiment has benefits because the structural design and materials used for the reflective material 14 can be optimized with respect to the optical properties, and the structural design and materials used for the deformable layer 34 can be optimized with respect to desired mechanical properties. The production of various types of interferometric devices is described in a variety of published documents, including, for example, U.S. Published Application 2004/0051929. A wide variety of well known techniques may be used to produce the above described structures involving a series of material deposition, patterning, and etching steps.

As described above, in certain embodiments, the interferometric modulators may be illuminated with light from an illumination apparatus that varies the color of illumination provided at different times. A sequence of colors such as for example, red, green, and blue may therefore be used to illuminate the interferometric modulators. The interferometric modulators selectively reflect this light to produce a color image.

As described above, interferometric modulators can be provided in arrays and are addressed to provide the desired display. Addressing directs the selected modulator to provide a predetermined optical response. The elements can be individually addressed or in the preferred embodiment can be addressed by means of strobing one set of electrodes and providing data on the other electrodes. (One preferred method of addressing reduces the number of control signals necessary to drive the display. This is described in detail in US Patent No. 5,986,796, entitled "Visible Spectrum Modulator Arrays" assigned to the assignee of the present invention.)

Accordingly, various embodiments comprise a display having an array of interferometric modulators, which when combined with an appropriately driven multi-colored light source can be used to produce colored images. Such a display is capable of being used as either a direct view color display or a projection color display. As described above, in certain embodiments a black state is produced when the interferometric modulator is actuated with the optical resonance cavity collapsed. In the released position with the cavity open, the interferometric modulators are designed to provide a predetermined reflection characteristic, which can either be broadband white such that a range of colors incident on the mirror will be reflected with approximately equal intensity or are tuned to have are reflectivity spectrum with a plurality of reflectance peaks overlapping or corresponding to the colors transmitted by the multi-colored light source. When an array of modulators of the type described above is combined with sequential illumination of the array by a set of primary colors such as red, green, and blue light, full color direct-view and projection displays can be realized. Utilizing high-speed light sources, such as LEDs, it is possible to make the color-field time much shorter than the response time of the eye, allowing for color fusion.

By implementing a full color display to be realized using a uniform array of interferometric modulators, the fabrication process of the display array can be simplified because the interferometric modulators have as single air-gap height and uniform mechanical layer design. This, in turn results in inherent voltage matching, such that the optical response to voltages applied to the electrodes will be substantially identical. In addition, there will be a substantially identical fill factor for each color because the total area of the pixel will be used for each color and the bit depth is independent of pixel layout. In one embodiment, a display fabricated provides a wide color gamut by means of proper light source selection, and allows for low power consumption in emissive-like mode in low ambient light level environments.

One exemplary embodiment provides three integrated parts: (1) an interferometric modulator array designed to reflect with three or more reflectance peaks in the visible spectrum; (2) a light source capable of emitting a set of primary colors, such as a light emitting diode or set of diodes capable of emitting a set of red, green and blue light with emission spectra chosen to match the reflectance peaks of the interferometric modulator array; and (3) a light guide designed to illuminate the interferometric modulator array with the light from the multi-colored light source. The interferometric modulator array is sequentially illuminated by red, green, and blue light. The light is guided on the array by one or more light guides. These light guides may have features (reflective or scatter features, etc.) such as corrugations, causing a portion of the light to deflect and illuminate the array at normal incidence. The light ismodulated and at least a portion is reflected normally through the light guide to the viewer.

Another embodiment also provides three integrated parts: (1) an interferometric modulator array designed to reflect with three or more reflectance peaks in the visible spectrum; (2) a light source capable of a broadband spectrum of light including at least a partial overlap of emission spectra corresponding to the reflectance peaks of the interferometric modulator array; and (3) a spectral filter designed to illuminate the interferometric modulator array (or portions thereof) with a particular spectrum of light from the broadband light source. This embodiment may also provide a light guide designed to illuminate the interferometric modulator array (or portions thereof) with the light passing through the spectral filter.

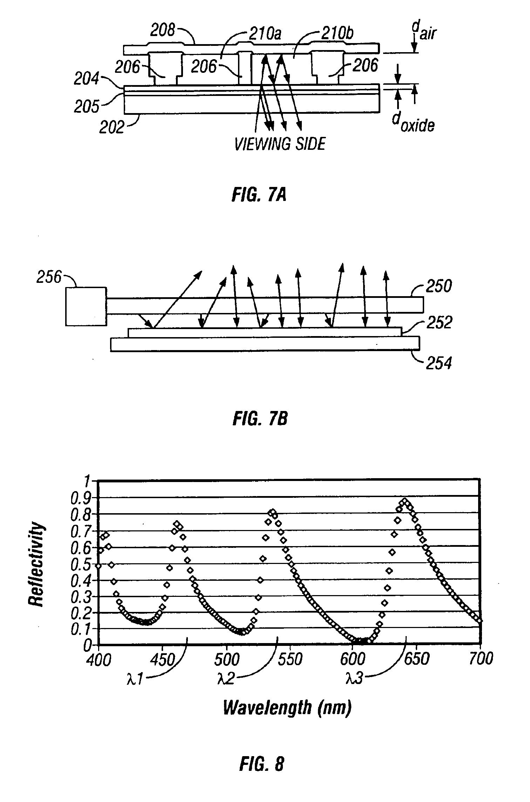

One embodiment of an exemplary array of interferometric modulators is illustrated in Figure 7A. In particular, Figure 7A shows two adjacent interferometric modulators structures. Additional details regarding such interferometric modulators are described in above. For the interferometric modulators shown in Figure 7A, a thin film of absorbing layer 205 is deposited on the substrate 202. In this exemplary embodiment, the conducting/absorbing layer 205 is made from chrome and ITO and substrate 202 may be made of glass. Above conducting/absorbing layer 205, a dielectric layer 204, typically an oxide, is deposited. Support posts 206 are provided to suspend a mechanical/mirror element 208 at a predetermined height above dielectric layer 204 designed to provide an optical response. Additional geometries and materials used in the fabrication of the interferometric modulator structure are discussed in detail in US Patent No. 5,835,255 and the aforementioned US Patent Application No. 09/966,843. As described above, other variations are possible.

In Figure 7A, the two independent modulators have optical cavities 210a and 210b that determine the optical response of the modulators. These cavities can be actuated or released independently of one another. In one embodiment, the modulators of the display all have essentially the same optical response. However, the color they display will be determined by the color of the illuminating light source and they are designed to reflect multiple wavelengths of light. It will be understood by one skilled in the art that the illustration of only two modulators is for illustrative purposes and that a display will have many more modulators.

In the exemplary embodiment illustrated in Figure 7A, the interferometric modulators each employ the same air gap distance (dₐᵢᵣ). As the optical response is tuned as a function of the modes of the wavelength of the reflected light, the cavity can be designed to reflect multiple wavelengths. Turning to Figure 8, the cavity height (dₐᵢᵣ) is selected to be highly reflective in the released state for at least three wavelengths (λ1, λ2 and λ3) represented as peaks in reflectivity. In one embodiment, these peaks correspond to the wavelength of the blue, green and red light emitted by the multi-colored light source. It will be understood by one skilled in the art that the teachings disclosed herein are equally applicable to the case when there are more or less reflective peaks than are illustrated and to the case where the modulator provides a broadband response reflecting peaks across the visible spectrum of light. For example, in one embodiment the cavity height (dₐᵢᵣ) is selected to be highly reflective in the released state for at least two wavelengths, such as cyan and yellow. If peaks in reflectivity are present around wavelengths not corresponding to one of the colors of light transmitted by the light source, those peaks are simply not employed and will not have a pronounced effect on the operation. In another embodiment, the light modulator is a broadband white light modulator providing a broadband response reflecting a wide range of wavelengths across the visible spectrum of light. The light source and/or the spectral filter will control what color is reflected by the light modulator since it will reflect the light spectrum fed to it.

Figure 7B illustrates an exemplary display configuration. Light source 256 provides different color at different times. In the exemplary embodiment, the light source is a light emitting diode, capable of sequentially emitting primary colors of light. In the exemplary embodiment, light source 256 will emit red light during a first time interval, green light during a second time interval and blue light during a third time interval. It will be understood by one skilled in the art that the any light source capable of sequentially emitting colors such as lamp & color wheels, rotating lamp & filter assemblies, and lamp/filter/rotating prism combinations may be used and need not be limited to the most common set of primary colors red, green and blue.

The light passes through one or more light guides 250. The light is directed through light guide 250 onto interferometric modulator array 252. Interferometric modulator array 252 is provided on substrate 254. Exemplary light guides may have features (reflective features, scatter features, etc.) such as corrugations on the light guide that cause some of the light to deflect and illuminate the array at normal incidence. Although normal deflection of light towards the array 252 is ideal, a normal reflective angle may not be a dominate reflective angle, as illustrated by Figure 7B. In turn, some of the light is modulated and reflected normally through the light guide to the viewer by interferometric modulator array 252. Again, some of the light reflected by the array 252 may be at a non-normal angle.

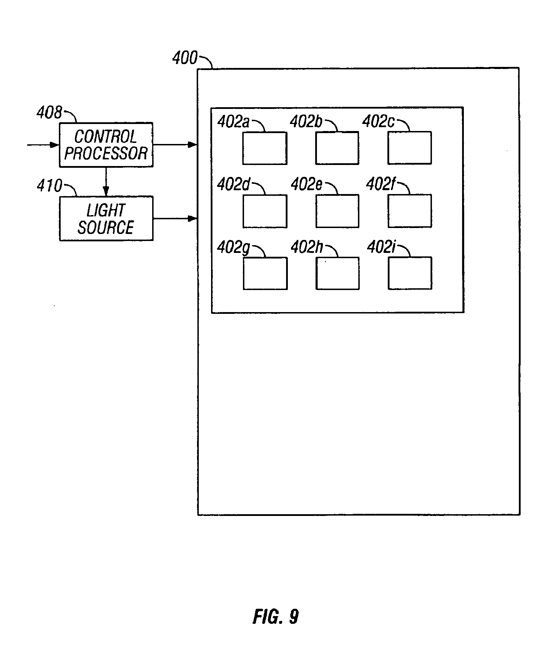

Figure 9 provides a block diagram of an exemplary display. Control processor 408 provides signals to display 400. Display 400 comprises a large number of pixel elements. Pixel elements 402a - 402i are provided for illustrative purposes. Pixel elements 402a - 402i are independently addressable. Traditionally, pixel elements 402a - 402i would comprise color specific sub pixels that would be responsible for displaying the colors red, blue, or green. However in one embodiment, pixel elements 402a ― 402i are capable of displaying all three colors and the color displayed is determined by the color of the light emitted by light source 410. In this particular embodiment, the pixel elements 402a - 402i are implemented using interferometric modulators.

The human eye in combination with the human brain integrates images which are altered faster than the capacity to be viewed individually. It is this integration that allows a sequence of images flashed at a rapid rate to appear to the viewer as continuous motion video. This integrating aspect of human sight is exploited as described herein in a different manner. If the color red and the color blue are alternately flashed at a viewer at a rapid enough rate, the viewer will see the color purple because the brain will in essence integrate or low pass filter the rapidly changing images.

Accordingly, control processor 408 receives an indication of the desired color to be displayed by each of the pixel elements 402a-i. Control processor 408 determines the ratio of red green and blue needed to produce this color. Based on this ratio a first number of interferometric modulators 402a-i will be selected to be in the released position (the cavity will be open) while light source 410 is emitting red light, a second number of interferometric modulators 402a-i will be selected to be in the released position (the cavity will be open) while light source 410 is emitting green light, and a third number of interferometric modulators 402a-i will be selected to be in the released position (the cavity will be open) while light source 410 is emitting blue light. By strobing sequentially through the red, green and blue colors fast enough an arbitrarily large color gamut can be realized.

In order to adjust the intensity of the displayed color, control processor 408 uses temporal dithering whereby the displayed color is flashed at a select number of the pixel elements 402a-i at predetermined intervals while the modulators of the select pixel elements 402a-i are actuated. When a modulator of a pixel element 402a-i is actuated, the pixel element displays black. By integrating this black state into the flashed sequence, the intensity of the color produced as described above can be reduced. In the preferred embodiment, the two methods described above can be used in conjunction with one another to provide the optimal pixel pattern displaying both the correct intensity and color. That is to say, the frames actively displaying color can be combined with the frames displaying black to adjust the intensity.

In addition, various embodiments provide display flexibility by permitting control processor 408 to control the color sequence, duty cycle and/or intensity of the light source 410. The output of the light source may be varied depending on the content of the images or other conditions. For example, under conditions requiring fewer colors (small color gamut), one or more light sources could be disabled. This has the advantage of reducing power consumption of the display.

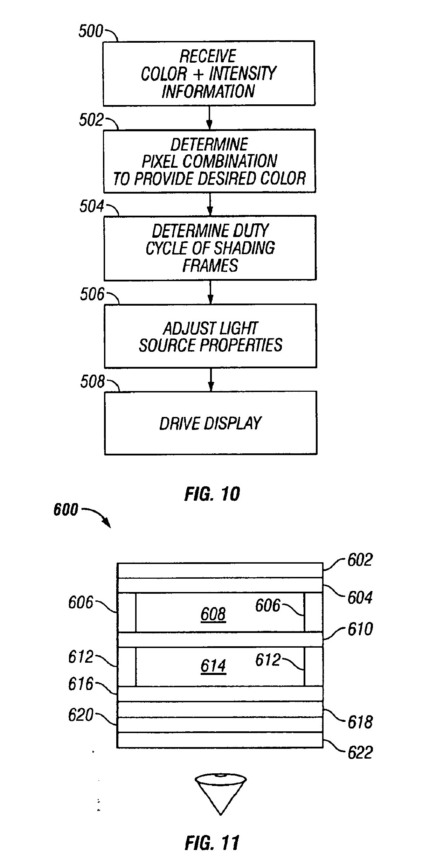

Figure 10 illustrates the operation of control processor 408. At block 500, control processor 408 receives color and intensity information regarding pixel elements 402a-i. In block 502, control processor 408 determines the number and location of pixels set to reflect light from light source 410 during its red cycle, its blue cycle and its green cycle. In block 504, control processor 408 determines the duty cycle of shading frames. The shading frames are black frames with all or a portion of the pixel elements 402a-i actuated in order to reduce the intensity of the color displayed by integrating a predetermined amount of black shading into the displayed color. In block 506, control processor 408 determines the color duty cycles, the rate of color change and intensity of the light transmitted by light source 410. In block 508, control processor 408 drives display 400 in accordance with the parameters determined above.

Figure 11 provides an alternative structure for the interferometric modulator. Modulator 600 comprises a lower electrode 622, typically fabricated from ITO. On top of electrode 622 is a first dielectric 620 such as SiO₂ is deposited. Above dielectric 620 is deposited a thin layer of absorber/conductor material 618 such as chrome and above the absorbing layer is an electrically isolating layer 616, which is fabricated from a material such as Al₂O_{3·} A first set of posts 612 are provided to support mirror 610 so as to form first optical cavity 614. The mirror 610 is typically fabricated from aluminum and may also act as an electrode. Above mirror 610 are a second set of posts 606, which are provided to support dielectric layer 604, which in the exemplary embodiment is composed of SiO₂. This results in the formation of second cavity 608. Above dielectric layer 604 is a high electrode 602. This modulator when viewed from below will display black in the unactuated state. When a field is applied between mirror 610 and electrode 602, causing cavity 608 to collapse, the modulator will have a spectral response defined in part by a vertical dimension of the optical cavity. When a field is applied between mirror 610 and electrode 622, causing cavity 614 to collapse, the modulator becomes a broadband mirror capable of high reflectance of all frequencies of incident light. In some embodiments, layer 616 is very thin, thereby minimizing a separation distance between the mirror 610 and a substrate (not depicted) configured below electrode 622 when the cavity 614 is collapsed. In one embodiment, layer 616 is 100 Angstroms thick.

This modulator operates as described with respect to other exemplary embodiments described above, but operates in a mode wherein the unactuated color is black, i.e. low reflectivity. This could have the advantage of reducing the number of pixels that need to be actuated in order to write an image, for example, in an image having a substantial portion that is black.

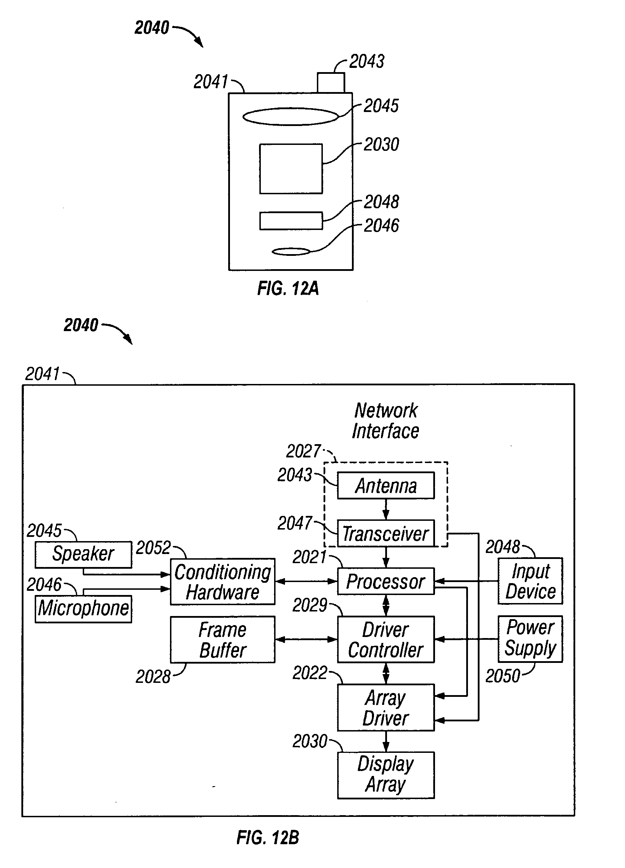

Figures 12A and 12B are system block diagrams illustrating an embodiment of a display device 2040. The display device 2040 can be, for example, a cellular or mobile telephone. However, the same components of display device 2040 or slight variations thereof are also illustrative of various types of display devices such as televisions and portable media players.

The display device 2040 includes a housing 2041, a display 2030, an antenna 2043, a speaker 2045, an input device 2048, and a microphone 2046. The housing 2041 is generally formed from any of a variety of manufacturing processes as are well known to those of skill in the art, including injection molding, and vacuum forming. In addition, the housing 2041 may be made from any of a variety of materials, including but not limited to plastic, metal, glass, rubber, and ceramic, or a combination thereof. In one embodiment the housing 2041 includes removable portions (not shown) that may be interchanged with other removable portions of different color, or containing different logos, pictures, or symbols.

The display 2030 of exemplary display device 2040 may be any of a variety of displays, including a bi-stable display, as described herein. In other embodiments, the display 2030 includes a flat-panel display, such as plasma, EL, OLED, STN LCD, or TFT LCD as described above, or a non-flat-panel display, such as a CRT or other tube device, as is well known to those of skill in the art. However, for purposes of describing the present embodiment, the display 2030 includes an interferometric modulator display, as described herein.

The components of one embodiment of exemplary display device 2040 are schematically illustrated in Figure 12B. The illustrated exemplary display device 2040 includes ahousing 2041 and can include additional components at least partially enclosed therein. For example, in one embodiment, the exemplary display device 2040 includes a network interface 2027 that includes an antenna 2043 which is coupled to a transceiver 2047. The transceiver 2047 is connected to the processor 2021, which is connected to conditioning hardware 2052. The conditioning hardware 2052 may be configured to condition a signal (e.g. filter a signal). The conditioning hardware 2052 is connected to a speaker 2045 and a microphone 2046. The processor 2021 is also connected to an input device 2048 and a driver controller 2029. The driver controller 2029 is coupled to a frame buffer 2028 and to the array driver 2022, which in turn is coupled to a display array 2030. A power supply 2050 provides power to all components as required by the particular exemplary display device 2040 design.

The network interface 2027 includes the antenna 2043 and the transceiver 2047 so that the exemplary display device 2040 can communicate with one or more devices over a network. In one embodiment the network interface 2027 may also have some processing capabilities to relieve requirements of the processor 2021. The antenna 2043 is any antenna known to those of skill in the art for transmitting and receiving signals. In one embodiment, the antenna transmits and receives RF signals according to the IEEE 802.11 standard, including IEEE 802.11(a), (b), or (g). In another embodiment, the antenna transmits and receives RF signals according to the BLUETOOTH standard. In the case of a cellular telephone, the antenna is designed to receive CDMA, GSM, AMPS or other known signals that are used to communicate within a wireless cell phone network. The transceiver 2047 pre-processes the signals received from the antenna 2043 so that they may be received by and further manipulated by the processor 2021. The transceiver 2047 also processes signals received from the processor 2021 so that they may be transmitted from the exemplary display device 2040 via the antenna 2043.

In an alternative embodiment, the transceiver 2047 can be replaced by a receiver. In yet another alternative embodiment, network interface 2027 can be replaced by an image source, which can store or generate image data to be sent to the processor 2021. For example, the image source can be a digital video disc (DVD) or a hard-disc drive that contains image data, or a software module that generates image data.

Processor 2021 generally controls the overall operation of the exemplary display device 2040. The processor 2021 receives data, such as compressed image data from the network interface 2027 or an image source, and processes the data into raw image data or into a format that is readily processed into raw image data. The processor 2021 then sends the processed data to the driver controller 2029 or to frame buffer 2028 for storage. Raw data typically refers to the information that identifies the image characteristics at each location within an image. For example, such image characteristics can include color, saturation, and gray-scale level.

In one embodiment, the processor 2021 includes a microcontroller, CPU, or logic unit to control operation of the exemplary display device 2040. Conditioning hardware 2052 generally includes amplifiers and filters for transmitting signals to the speaker 2045, and for receiving signals from the microphone 2046. Conditioning hardware 2052 may be discrete components within the exemplary display device 2040, or may be incorporated within the processor 2021 or other components.

The driver controller 2029 takes the raw image data generated by the processor 2021 either directly from the processor 2021 or from the frame buffer 2028 and reformats the raw image data appropriately for high speed transmission to the array driver 2022. Specifically, the driver controller 2029 reformats the raw image data into a data flow having a raster-like format, such that it has a time order suitable for scanning across the display array 2030. Then the driver controller 2029 sends the formatted information to the array driver 2022. Although a driver controller 2029, such as a LCD controller, is often associated with the system processor 2021 as a stand-alone Integrated Circuit (IC), such controllers may be implemented in many ways. They may be embedded in the processor 2021 as hardware, embedded in the processor 2021 as software, or fully integrated in hardware with the array driver 2022.

Typically, the array driver 2022 receives the formatted information from the driver controller 2029 and reformats the video data into a parallel set of waveforms that are applied many times per second to the hundreds and sometimes thousands of leads coming from the display's x-y matrix of pixels.

In one embodiment, the driver controller 2029, array driver 2022, and display array 2030 are appropriate for any of the types of displays described herein. For example, in one embodiment, driver controller 2029 is a conventional display controller or a bi-stable display controller (e.g., an interferometric modulator controller). In another embodiment, array driver 2022 is a conventional driver or a bi-stable display driver (e.g., an interferometric modulator display). In one embodiment, a driver controller 2029 is integrated with the array driver 2022. Such an embodiment is common in highly integrated systems such as cellular phones, watches, and other small area displays. In yet another embodiment, display array 2030 is a typical display array or a bi-stable display array (e.g., a display including an array of interferometric modulators).

The input device 2048 allows a user to control the operation of the exemplary display device 2040. In one embodiment, input device 2048 includes a keypad, such as a QWERTY keyboard or a telephone keypad, a button, a switch, a touch-sensitive screen, a pressure- or heat-sensitive membrane. In one embodiment, the microphone 2046 is an input device for the exemplary display device 2040. When the microphone 2046 is used to input data to the device, voice commands may be provided by a user for controlling operations of the exemplary display device 2040.

Power supply 2050 can include a variety of energy storage devices as are well known in the art. For example, in one embodiment, power supply 2050 is a rechargeable battery, such as a nickel-cadmium battery or a lithium ion battery. In another embodiment, power supply 2050 is a renewable energy source, a capacitor, or a solar cell, including a plastic solar cell, and solar-cell paint. In another embodiment, power supply 2050 is configured to receive power from a wall outlet.

In some implementations control programmability resides, as described above, in a driver controller which can be located in several places in the electronic display system. In some cases control programmability resides in the array driver 2022. Those of skill in the art will recognize that the above-described optimization may be implemented in any number of hardware and/or software components and in various configurations.

While the above detailed description has shown, described, and pointed out novel features of the invention as applied to various embodiments, it will be understood that various omissions, substitutions, and changes in the form and details of the device or process illustrated may be made by those skilled in the art without departing from the spirit of the invention. As will be recognized, the present invention may be embodied within a form that does not provide all of the features and benefits set forth herein, as some features may be used or practiced separately from others.

## Claims

1. A display device, comprising:
means for interferometrically modulating light, wherein the modulating means is capable of reflecting light having a plurality of intensity peaks in the visible spectrum; and
means for selectively illuminating said modulating means with light including at least said plurality of intensity peaks in the visible spectrum.

2. The display device of Claim 1, wherein said modulating means comprises at least one interferometric modulator.

3. The display device of Claim 1 or 2, wherein said illuminating means comprises at least one light source.

4. The display device of Claim 1, further comprising means for controlling the selective illumination of said modulating means,

5. The display device of Claim 1, wherein said controlling means is configured to control a color sequence, duty cycle, or intensity of light with which said modulating means is illuminated.

6. The display device of Claim 1, further comprising means for directing light from said illuminating means to said modulating means.

7. The display device of Claim 1, wherein the plurality of intensity peaks in the visible spectrum comprises either red, green, and blue color peaks or cyan and yellow color peaks.

8. The display device of Claim 1, wherein said modulating means comprises at least one interferometric light modulator configured to reflect light, said at least one interferometric light modulator having a spectral response including two or more reflectance peaks in the visible spectrum.

9. The display device of Claim 8, wherein said illuminating means comprises a light source having an emission spectra that includes at least one emission peak at least partially overlapping one of said two or more reflectance peaks.

10. The device of Claim 9, further comprising a light guide configured to propagate light to said at least one interferometric light modulator.

11. The display device of Claim 10, wherein said light source includes a plurality of emission peaks at least partially overlapping a plurality of said two or more reflectance peaks.

12. The display device of Claim 11, wherein the light guide is configured to select at least one of said emission peaks.

13. The display device of Claim 9, wherein said at least one interferometric light modulator comprises an optical cavity formed by a pair of reflective surfaces having a gap therebetween.

14. The display device of Claim 13, wherein said gap defines a cavity height that produces said two or more reflectance peaks in said spectral response.

15. The display device of Claim 9, further comprising a plurality of interferometric light modulators, wherein each of the plurality of interferometric light modulators has an optical cavity comprising an open state and a closed state, wherein the plurality of interferometric light modulators are configured to have essentially the same spectral response in an open state and essentially the same spectral response in a closed state.

16. The display device of Claim 9, wherein said spectral response of said at least one interferometric light modulator includes three or more reflectance peaks in the visible spectrum, said three or more reflectance peaks comprising red, green and blue color peaks.

17. The display device of Claim 9, further comprising an array of pixel elements, each pixel element comprising at least one interferometric light modulator.

18. The display device of Claim 17, further comprising a control system is configured control reflectance of said at least one interferometric modulator in said pixel elements such that said pixel elements display an image.

19. The display device of Claim 17, further comprising a control system configured to receive a display signal for an image and configured to control illumination of said pixel elements such that said pixel elements display said image.

20. The display device of Claim 19, wherein said control system is configured to control a color sequence, duty cycle, or intensity of light with which said pixel elements are illuminated.

21. The display device of Claim 9, wherein the light source comprises a light emitting diode.

22. The display device of Claim 1, further comprising:
a processor that is in electrical communication with said modulating means, said processor being configured to process image data; and
a memory device in electrical communication with said processor.

23. The display device of Claim 22, further comprising:
a driver circuit configured to send at least one signal to said modulating means.

24. The display device of Claim 23, further comprising:
a controller configured to send at least a portion of said image data to said driver circuit.

25. The display device of Claim 22, further comprising:
an image source module configured to send said image data to said processor.

26. The display device of Claim 25, wherein said image source module comprises at least one of a receiver, transceiver, and transmitter.

27. The display device of Claim 22, further comprising:
an input device configured to receive input data and to communicate said input data to said processor.

28. A method of manufacturing a display device, comprising:
providing a plurality of pixel elements, each pixel element comprising at least one interferometric light modulator having a spectral response that includes two or more reflectance peaks in the visible spectrum; and
providing a light source configured to selectively illuminate said plurality of pixel elements with light having one or more spectral peaks substantially overlapping said two or more reflectance peaks.

29. The method of Claim 28, further comprising positioning a spectral filter in an optical path between said light source and said pixel elements, said spectral filter configured to produce said one or more spectral peaks.

30. The method of Claim 28, further comprising positioning a light guide with respect to said light source and said pixel elements to convey light from said light source to said pixel elements.

31. The method of Claim 30, wherein said light guide is configured to produce said one or more spectral peaks.

32. The method of Claim 31, wherein the interferometric light modulators each comprise an optical cavity formed by a pair of reflective surfaces separated by a distance.

33. The method of Claim 28, wherein the at least one interferometric light modulator of the plurality of pixel elements comprises an optical cavity having an open state and a closed state, wherein the at least one interferometric light modulator of the plurality of pixel elements is configured to have essentially the same spectral response in an open state and essentially the same spectral response in a closed state.

34. The method of Claim 28, wherein said at least one interferometric light modulator is configured to reflect light including three or more intensity peaks in the visible spectrum, said three or more intensity peaks comprising red, green and blue color peaks.

35. The method of Claim 28, further comprising providing a control system configured to control selective illumination of the pixel elements with said one or more spectral peaks.

36. The method of Claim 35, wherein said control system is configured to control color sequence, duty cycle, or intensity of light with which said pixel elements are illuminated.

37. The method of Claim 35, wherein said control system is configured to switch said interferometric modulators in said pixel elements between different output states.

38. The method of Claim 28, wherein the light source comprises a light emitting diode.

39. The display device fabricated by the method of any of Claims 28 to 38.

40. A method of displaying an image, comprising:
illuminating at least one interferometric light modulator with light from a light source; and
reflecting said light from said at least one interferometric light modulator,
wherein (i) said at least one interferometric light modulator has a spectral response including two or more reflectance peaks in the visible spectrum, and (ii) said light source has an emission spectra that includes at least one emission peak at least partially overlapping one of said two or more reflectance peaks.

41. A display device, comprising:
means for interferometrically modulating light switchable between different reflective states; and
means for selectively illuminating said modulating means with light of different color at different times.

42. The display device of Claim 41, wherein said modulating means comprises a plurality of pixel elements, each pixel element comprising an interferometric light modulator.

43. The display device of Claim 41 or 42, wherein said illuminating means comprises an illumination apparatus.

44. The display device of Claim 43, wherein said illumination apparatus comprises a light source.

45. The display device of Claim 41, further comprising a control system configured to control sequential illumination of said pixel elements with said color light to produce a desired color by color fusion.

46. The display device of Claim 41, further comprising a control system configured to control said reflective states of said pixel elements.

47. The display device of Claim 41, wherein said illuminating means comprises an illumination apparatus configured to emit light comprising an emission spectra having a spectral output that varies with time.

48. The display device of Claim 47, wherein said modulating means comprises at least one light modulating device configured to reflect light from said illumination apparatus, said at least one light modulating device comprising an optical cavity formed by a pair of reflective surfaces.

49. The display device of Claim 48, wherein said at least one light modulating device is a broadband light modulating device.

50. The display device of Claim 49, further comprising a control system configured to vary the spectral output of the illumination apparatus.

51. The display device of Claim 50, wherein said control system is configured to select different reflective states of the at least one light modulating device.

52. The display device of Claim 41, further comprising:
a processor that is in electrical communication with said modulating means, said processor being configured to process image data; and
a memory device in electrical communication with said processor.

53. The display device of Claim 52, further comprising:
a driver circuit configured to send at least one signal to said modulating means.

54. The display device of Claim 53, further comprising:
a controller configured to send at least a portion of said image data to said driver circuit.

55. The display device of Claim 52, further comprising:
an image source module configured to send said image data to said processor.

56. The display device of Claim 55, wherein said image source module comprises at least one of a receiver, transceiver, and transmitter.

57. The display device of Claim 52, further comprising an input device configured to receive input data and to communicate said input data to said processor.

58. A method of manufacturing a display device, comprising:
providing a plurality of pixel elements, each pixel element comprising an interferometric light modulator switchable between different reflective states; and
disposing an illumination apparatus with respect to said plurality of pixel elements so as to selectively illuminate the plurality of pixel elements with light of different color at different times.

59. The display device manufactured by the method of Claim 58.

60. A method of displaying an image, comprising:
selectively illuminating a plurality of pixel elements with light of different color at different times, each pixel element comprising an interferometric light modulator switchable between different reflective states; and
reflecting said light from at least a portion of said plurality of pixel elements.
